# EUROPEAN PATENT APPLICATION

(11) **EP 4 586 109 A1**
(43) Date of publication of application: **16.07.2025**
(21) Application number: 23869923.5
(22) Date of filing: 17.07.2023
(51) Int. Cl.: G06F 16/9535, G06N 5/04

(54) **INFERENCE METHOD AND APPARATUS FOR NEURAL NETWORK MODEL, AND RELATED DEVICE**

(30) Priority: 30.09.2022 CN 202211212711
(71) Applicant: Huawei Technologies Co., Ltd., Shenzhen, Guangdong 518129 (CN)
(72) Inventor: WANG, Guowei, Shenzhen, Guangdong 518129 (CN); XU, Hua, Shenzhen, Guangdong 518129 (CN)
(74) Representative: Gill Jennings & Every LLP
(86) International application number: PCT/CN2023/107683
(87) International publication number: WO 2024/066676

(57) **Abstract**

This application provides an inference method for a neural network model. The method is applied to a computing cluster. The computing cluster includes a plurality of inference servers and a memory pool. Each inference server includes at least one inference card and a local memory. The method includes: A first inference card of a first inference server in the computing cluster receives an inference task. If a parameter for executing the inference task is not hit in the first inference card, the first inference card obtains the parameter from a local memory of the first server. If the parameter is not hit in the local memory of the first server, the first inference card obtains the parameter from the memory pool. The first inference card can execute the inference task based on all obtained parameters. A speed of obtaining the parameter by the first inference card can be improved based on a high-speed read/write capability of the local memory of the first inference server, to reduce a delay of obtaining the parameter by the first inference card, and meet a requirement for a low delay of executing the inference task. In addition, this application further provides a corresponding apparatus, computing cluster, and storage medium.

## Description

This application claims priority to Chinese Patent Application No. 202211212711.6, filed with the China National Intellectual Property Administration on September 30, 2022 and entitled "INFERENCE METHOD AND APPARATUS FOR NEURAL NETWORK MODEL, AND RELATED DEVICE", which is incorporated herein by reference in its entirety.

### TECHNICAL FIELD

This application relates to the field of data processing technologies, and in particular, to an inference method and apparatus for a neural network model, and a related device.

### BACKGROUND

In a process of training or inferring some neural network models, input data is processed into discrete features, the discrete features are converted by using model parameters to obtain continuous features, and the obtained continuous features are used for subsequent processing. Only some model parameters are used in one process of training or inference these neural network models. Model parameters that are only partially used in one training or inference process are also referred to as sparse parameters.

Currently, a computing cluster executes an inference task of a neural network model. Some sparse parameters of the neural network model are stored in a distributed database established based on a server included in the computing cluster. A delay of querying a sparse parameter by using a query service provided by the distributed database is high, and it is difficult to meet a requirement of obtaining the sparse parameter to execute the inference task.

### SUMMARY

This application provides an inference method for a neural network model. After a parameter for executing an inference task is not hit in a first inference card of a first inference server, the first inference card can query a local memory of the first inference server for the parameter. A speed of obtaining the parameter can be improved and a delay of obtaining the parameter can be reduced based on a high-speed read/write capability of the local memory of the first inference server, to meet a requirement for executing the inference task. This application further provides a corresponding apparatus, a computing device cluster, a computer-readable storage medium, and a computer program product.

According to a first aspect, this application provides an inference method for a neural network model, and the method can be applied to a computing cluster. The computing cluster includes a plurality of inference servers and a memory pool. Each inference server includes an inference card and a local memory. After an inference task for the neural network model is obtained, a first inference card of a first inference server in the computing cluster receives the inference task. Parameters are required for executing the inference task. The first inference card, a local memory of the first inference server, and the memory pool all store related parameters of the inference task for the neural network model in advance. The first inference card first queries the first inference card for the parameters for executing the inference task. If all the parameters for executing the inference task are hit in the first inference card, the first inference card obtains all the parameters for executing the inference task, and executes the inference task based on all the obtained parameters. If the parameter for executing the inference task is not hit in the first inference card, the first inference card obtains, from the local memory of the first inference server, the parameter for executing the inference task. If the first inference card hits, in the local memory of the first inference server, all the parameters for executing the inference task, the first inference card obtains all the parameters from the local memory of the first inference server, and executes the inference task based on all the parameters. If the first inference card does not hit the parameter in the local memory of the first inference server, the first inference card obtains the parameter from the memory pool. After obtaining all the parameters for executing the inference task, the first inference card executes the inference task based on all the parameters. The local memory of the first inference server can provide a high-speed read/write service, to improve a speed of obtaining the parameter by the first inference card from the local memory, reduce a delay of obtaining the parameter, and improve efficiency of obtaining the parameter by the first inference card and efficiency of executing the inference task.

In some possible implementations, the memory pool stores full parameters of the neural network model. In this way, when the first inference card cannot obtain the parameter from the first inference card and the local memory of the first inference server, the first inference card can obtain, from the memory pool, the parameter required for executing the inference task, so that the first inference card can obtain all the parameters to execute the inference task.

In some possible implementations, the local memory of the first inference server is a shared memory. The local memory of the first inference server can provide a service of simultaneous access for at least one inference card included in the first inference server. In this way, the at least one inference card included in the first inference server can simultaneously access the local memory of the first inference server, to improve efficiency of obtaining data by the inference card included in the first inference server.

In some possible implementations, the local memory of the first inference server manages parameters of the local memory by using a hash table. The hash table records hash values of indexes of parameters and the corresponding parameters. The first inference card can determine, based on the hash values of the indexes of the to-be-obtained parameters required for executing the inference task, whether a hash value of an index of the parameter exists in the hash table. If the hash value of the index of the parameter exists in the hash table, it indicates that the parameter is stored in the local memory, and the first inference card can hit the hash value in the local memory. The first inference card obtains, from the local memory of the first inference server, the parameter corresponding to the hash value, that is, the parameter required for executing the inference task.

In some possible implementations, the hash table used to manage the parameter of the local memory of the first inference server further includes state information of the parameter. The state information of the parameter identifies a state of the parameter, and specifically includes a read state or a write state. When the state information of the parameter indicates that the parameter is in the write state, another inference card that accesses the parameter cannot update the parameter. In this way, based on the state information of the parameter, a lock-free high-speed read/write of the parameter can be implemented, and a high-concurrency query of the parameter can be implemented, to improve efficiency of obtaining the parameter by the inference card of the first inference server from the local memory of the first inference server.

According to a second aspect, this application provides an inference apparatus for a neural network model. The inference apparatus is used in a first inference card of a first inference server included in a computing cluster. The computing cluster includes a plurality of inference servers and a memory pool, and each inference server includes at least one inference card and a local memory. The inference apparatus includes a receiving module, configured to receive an inference task; a query module, configured to: after a parameter for executing the inference task is not hit in the first inference card, obtain the parameter from a local memory of the first inference server, where the query module is further configured to obtain the parameter from the memory pool when the parameter is not hit in the local memory; and an execution module, configured to: after all parameters for executing the inference task are obtained, execute the inference task.

In some possible implementations, the memory pool stores full parameters of the neural network model, so that all the parameters can be obtained from the memory pool to perform the inference task.

In some possible implementations, the local memory is a shared memory that can be simultaneously accessed by the at least one inference card.

In some possible implementations, the local memory manages parameters in the local memory by using a hash table, and the hash table records corresponding parameters and hash values of indexes of the parameters. That the query module is configured to obtain the parameter from the local memory of the first inference server includes that the query module is configured to: determine, based on the hash values of the indexes of the parameters, whether a hash value of an index of the parameter exists in the hash table, and if the hash value exists in the hash table, hit the hash value in the local memory, and obtain the parameter corresponding to the hash value.

In some possible implementations, the hash table further includes state information of the parameter. The state information identifies whether the parameter is in a read state or a write state. When the parameter is in the write state, the parameter cannot be updated.

According to a third aspect, this application provides a computing device cluster, where the computing device includes at least one computing device, and the at least one computing device includes at least one processor and at least one storage. The at least one storage is configured to store instructions, and the at least one processor executes the instructions stored in the at least one storage, so that the computing device cluster performs the inference method for the neural network model in any one of the first aspect or the possible implementations of the first aspect. It should be noted that the storage may be integrated into the processor, or may be independent of the processor. The at least one computing device may further include a bus. The processor is connected to the storage over the bus. The storage may include a readable memory and a random access memory.

According to a fourth aspect, this application provides a computer-readable storage medium, where the computer-readable storage medium stores instructions. When the instructions are run on at least one computing device, the at least one computing device is enabled to perform the method according to any one of the foregoing aspects or any implementation of any one of the foregoing aspects.

According to a fifth aspect, this application provides a computer program product including instructions. When the computer program product runs on at least one computing device, the at least one computing device is enabled to perform the method according to any one of the foregoing aspects or any implementation of any one of the foregoing aspects.

In this application, the implementations may be further combined to provide more implementations based on the implementations according to the foregoing aspects.

### BRIEF DESCRIPTION OF DRAWINGS

FIG. 1 is a diagram of an architecture of a computing cluster;
FIG. 2 is a diagram of an application scenario according to an embodiment of this application;
FIG. 3 is a diagram of another application scenario according to an embodiment of this application;
FIG. 4 is a diagram of still another application scenario according to an embodiment of this application;
FIG. 5 is a schematic flowchart of an inference method for a neural network model according to an embodiment of this application;
FIG. 6 is a diagram of a structure of an inference server according to an embodiment of this application;
FIG. 7 is a diagram of a structure of an inference apparatus for a neural network model according to an embodiment of this application;
FIG. 8 is a diagram of a structure of a computing device according to an embodiment of this application; and
FIG. 9 is a diagram of a structure of a computing device cluster according to an embodiment of this application.

### DESCRIPTION OF EMBODIMENTS

The following describes the solutions in embodiments provided in this application with reference to the accompanying drawings in this application.

In the specification, claims, and the accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application.

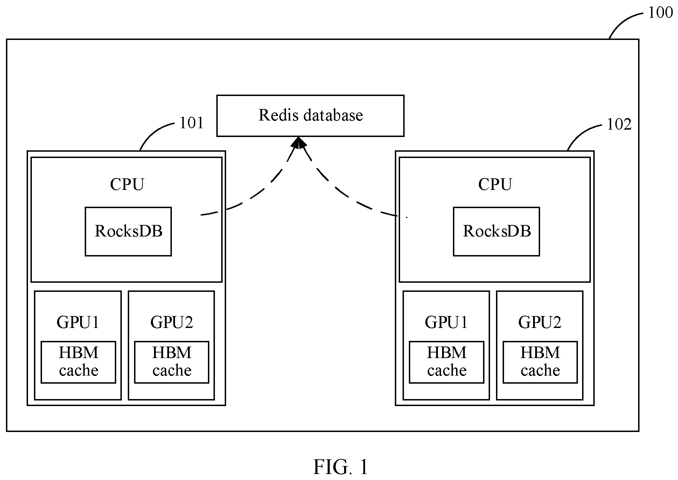

FIG. 1 is a diagram of an architecture of a computing cluster. The computing cluster 100 is configured to execute an inference task. The computing cluster 100 includes an inference server 101 and an inference server 102. Each inference server includes one central processing unit (Central Processing Unit, CPU) and one or more graphics processing units (graphics processing units, GPUs). The inference server uses a three-layer storage structure to store a sparse parameter. The three-layer storage structure includes an HBM cache constructed based on a high bandwidth memory (High Bandwidth Memory, HBM) in the GPU, a remote dictionary server (Remote Dictionary Server, Redis) database established based on a host memory in the CPU, and a RocksDB (an embedded and persistent Key-Value (key-value) storage) constructed based on a persistent storage in the CPU. The Redis database is a distributed memory database, and is constructed by using a memory of the inference server 101 and a memory of the inference server 102. The HBM cache and the Redis database have limited capacities, and can store only a part of sparse parameters. The RocksDB stores full sparse parameters.

The inference server 101 is used as an example. The inference server 101 obtains an inference task, and a GPU1 establishes a corresponding inference instance. The GPU1 runs the inference instance and determines a to-be-queried sparse parameter. The GPU1 queries the sparse parameter in an HBM cache established in the GPU1. If the HBM cache does not store the required sparse parameter, the required sparse parameter is queried in the Redis database, and a query service provided by the Redis database is used to query the sparse parameter. A delay generated in the query process is high, and consequently, a speed of processing the inference task by the inference server 101 is reduced, and it is difficult to meet a requirement for processing the inference task.

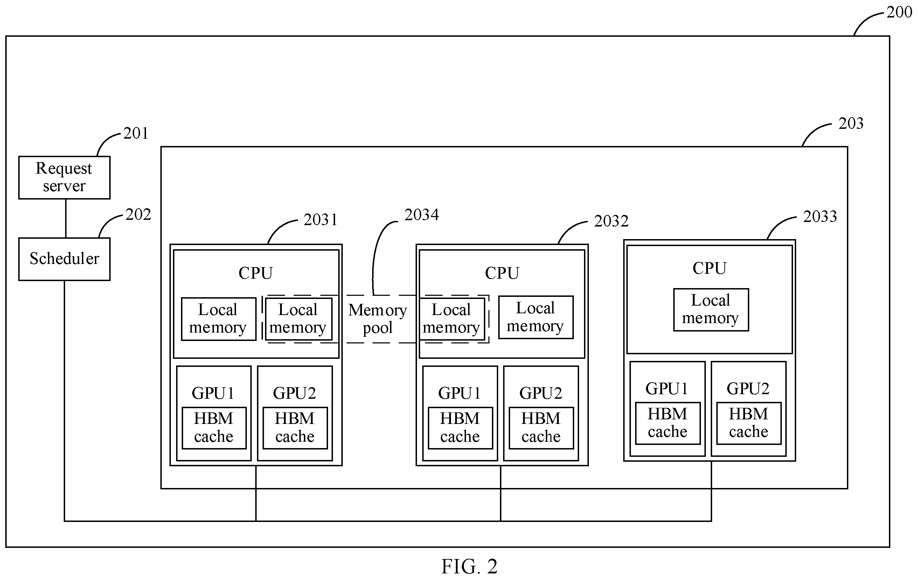

For the foregoing problem, an embodiment of this application provides an inference method for a neural network model. The inference method for the neural network model can be applied to a computing cluster. FIG. 2 is a diagram of an application scenario according to an embodiment of this application. An inference system 200 includes a request server 201, a scheduler 202, and a computing cluster 203. The computing cluster 203 includes a plurality of inference servers, for example, an inference server 2031, an inference server 2032, and an inference server 2033. Each inference server included in the computing cluster 203 includes at least one inference card and a local memory. In an example, each inference server includes one central processing unit (Central Processing Unit, CPU) and one or more graphics processing units (graphics processing units, GPUs). The local memory is established in the central processing unit, and the inference card is established in each graphics processing unit. The computing cluster 203 further includes a memory pool 2034. The memory pool 2034 includes local memories of one or more inference servers. In an example, the memory pool 2034 includes a part of local memories of the inference server 2031 and a part of local memories of the inference server 2032.

The computing cluster 203 stores, by using a three-layer storage structure, a parameter for executing an inference task. The three-layer storage structure includes the inference card included in each inference server, the local memory included in each inference server, and the memory pool 2034. The inference card included in each inference server stores a part of parameters, the local memory included in each inference server stores a part of parameters, and the memory pool 2034 stores full parameters. The parameters stored in the inference card included in each inference server support parameter query in the inference card. The local memory included in each inference server supports parameter query in the inference card included in the inference server. The local memory is a lock-free cache, and supports high-concurrency query in a plurality of inference cards, which can reduce a parameter query delay. The memory pool 2034 supports parameter query in the inference card included in each inference server included in the computing cluster 203. The memory pool 2034 registers with a remote direct memory access (Remote Direct Memory Access, RDMA) network card. The memory pool 2034 transmits a parameter to the inference card of each inference server through RDMA, so that parameter transmission efficiency can be improved, and a parameter query delay can be reduced.

The request server 201 receives a request for processing the inference task. The request for processing the inference task is, for example, a hypertext transfer protocol (Hypertext Transfer Protocol, HTTP) request, or a remote procedure call (Remote Procedure Call, RPC) request. The request server 201 determines the inference task based on the received request for processing the inference task. The request server 201 sends the inference task to the scheduler 202. The scheduler allocates, based on load statuses of the inference server 2031, the inference server 2032, and the inference server 2033 included in the computing cluster 203, the inference task to the inference server 2031 with less load. The inference card of the inference server 2031 receives the inference task, and establishes an inference instance corresponding to the inference task in the inference card. The inference card of the inference server 2031 runs the inference instance, and queries the parameter required for executing the inference task in the parameters stored in the inference card. If the inference card of the inference server 2031 finds the parameter required for executing the inference task, the inference card executes the inference task by using the found parameter. If the inference card of the inference server 2031 does not find the parameter required for executing the inference task, the inference card queries the parameter required for executing the inference task in the local memory of the inference server 2031. If the inference card of the inference server 2031 finds the parameter required for executing the inference task in the local memory of the inference server 2031, the inference card executes the inference task by using the found parameter. If the inference card of the inference server 2031 does not find the parameter required for executing the inference task in the local memory of the inference server 2031, the inference card queries the parameter required for executing the inference task in the memory pool 2034, and executes the inference task by using the parameter that is required for executing the inference task and that is found from the memory pool 2034.

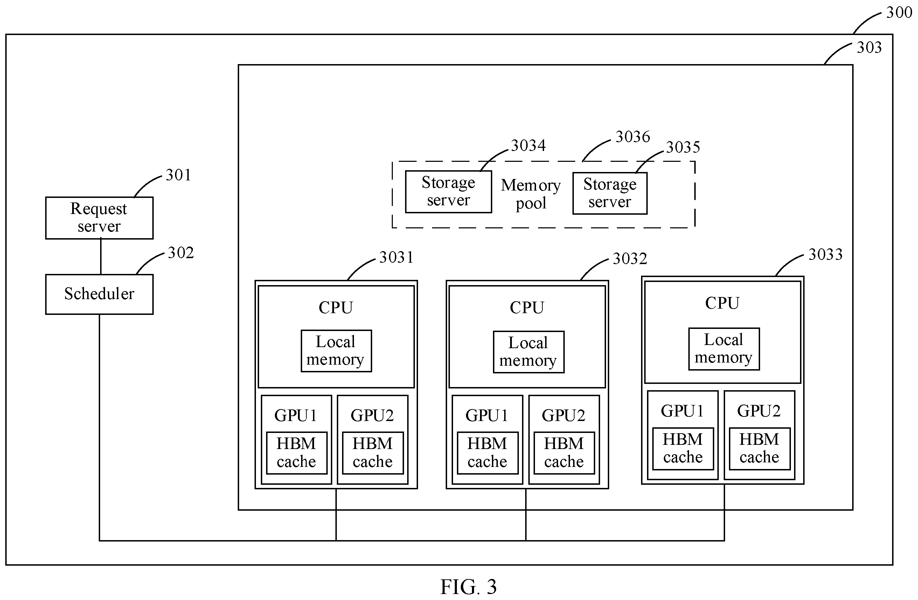

In another example, the memory pool is constructed based on a memory of a dedicated storage server. FIG. 3 is a diagram of another application scenario according to an embodiment of this application. An inference system 300 includes a request server 301, a scheduler 302, and a computing cluster 303. The computing cluster 303 includes a plurality of inference servers, for example, an inference server 3031, an inference server 3032, and an inference server 3033. The computing cluster 303 further includes a plurality of storage servers, for example, a storage server 3034 and a storage server 3035. The storage server 3034 and the storage server 3035 construct a memory pool 3036.

In the computing cluster 303, each inference server includes a local memory and one or more inference cards. The local memory is constructed based on a CPU of the inference server. The inference card is established based on a GPU of the inference server.

The computing cluster 303 stores, by using a three-layer storage structure, a parameter for executing an inference task. The three-layer storage structure includes the inference card included in each inference server, the local memory included in each inference server, and the memory pool 3036. The inference card included in each inference server stores a part of parameters, the local memory included in each inference server stores a part of parameters, and the memory pool 3036 stores full parameters. The parameter stored in the inference card included in each inference server supports parameter query in the inference card. The local memory included in each inference server supports parameter query in the inference card included in the inference server. The memory pool 3036 supports parameter query in the inference card included in each inference server included in the computing cluster 303. The memory pool 2036 is registered on a remote direct memory access (Remote Direct Memory Access, RDMA) network card. The memory pool 2036 transmits the parameter to the inference card of each inference server through RDMA, so that parameter transmission efficiency can be improved, and a delay of querying the parameter can be reduced.

Processes in which the request server 301 processes a request, the scheduler 302 allocates the inference task, and the computing cluster 303 processes the inference task are respectively similar to those in which the request server 201 processes the request, the scheduler 202 allocates the inference task, and the computing cluster 203 processes the inference task. For details, refer to the foregoing descriptions. Details are not described herein again.

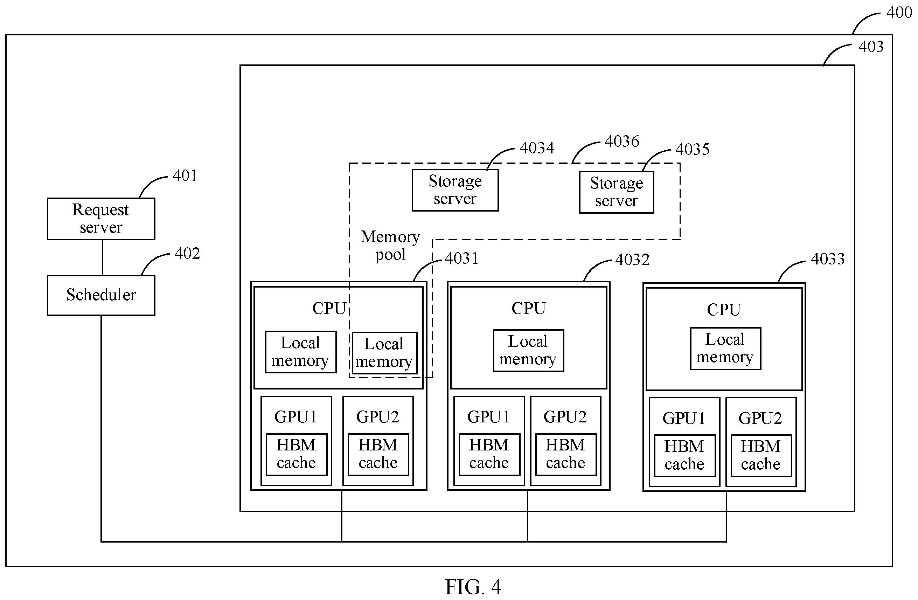

As still another example, the memory pool is constructed based on a memory of a dedicated storage server and a part of free local memories of the inference server. FIG. 4 is a diagram of still another application scenario according to an embodiment of this application. An inference system 400 includes a request server 401, a scheduler 402, and a computing cluster 403. The computing cluster 403 includes a plurality of inference servers, for example, an inference server 4031, an inference server 4032, and an inference server 4033. The computing cluster 403 further includes a plurality of storage servers, for example, a storage server 4034 and a storage server 4035. A memory pool 4036 is constructed based on a memory of the storage server 4034, a memory of the storage server 4035, and a part of local memories of the inference server 4031. Each inference server included in the computing cluster 403 includes a local memory and one or more inference cards. The local memory is constructed based on a CPU of the inference server. The inference card is established based on a GPU of the inference server.

The computing cluster 403 stores, by using a three-layer storage structure, a parameter for executing an inference task. The three-layer storage structure includes the inference card included in each inference server, the local memory included in each inference server, and the memory pool 4036. The inference card included in each inference server stores a part of parameters, the local memory included in each inference server stores a part of parameters, and the memory pool 4036 stores full parameters. The parameter stored in the inference card included in each inference server supports parameter query in the inference card. The local memory included in each inference server supports parameter query in the inference card included in the inference server. The memory pool 4036 supports parameter query in the inference card included in each inference server included in the computing cluster 403.

Processes in which the request server 401 processes a request, the scheduler 402 allocates the inference task, and the computing cluster 403 processes the inference task are respectively similar to those in which the request server 201 processes the request, the scheduler 202 allocates the inference task, and the computing cluster 203 processes the inference task. For details, refer to the foregoing descriptions. Details are not described herein again.

It should be noted that the application scenarios shown in FIG. 2 to FIG. 4 are merely used as implementation examples. In actual application, the inference method for the neural network model provided in embodiments of this application may also be applied to another applicable scenario.

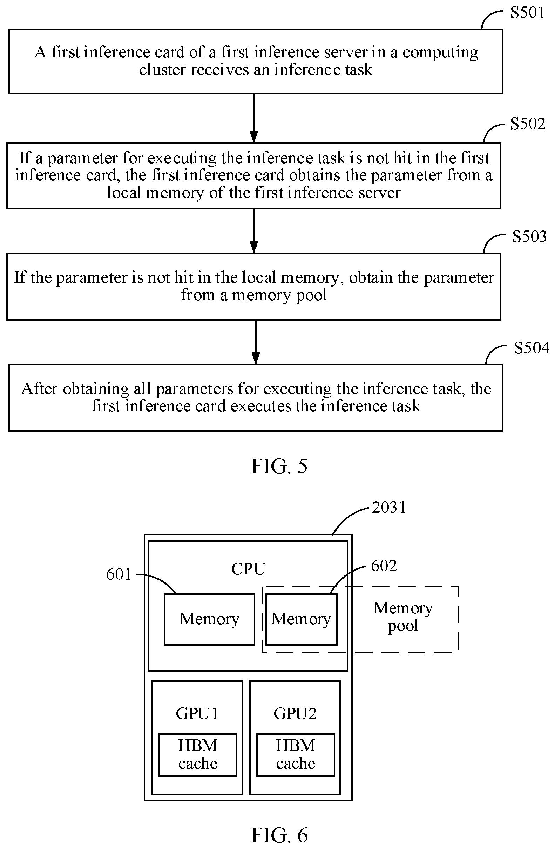

For ease of understanding, the following describes in detail the inference method for the neural network model provided in embodiments of this application with reference to the accompanying drawings. FIG. 5 is a schematic flowchart of an inference method for a neural network model according to an embodiment of this application. The method can be applied to the computing cluster 203 shown in FIG. 2, the computing cluster 303 shown in FIG. 3, and the computing cluster 403 shown in FIG. 4. The following uses the application scenario shown in FIG. 2 as an example for description. As shown in FIG. 5, the method may specifically include S501 to S504.

S501: A first inference card of a first inference server in a computing cluster receives an inference task.

The computing cluster is a cluster configured to process the inference task. The computing cluster includes a plurality of inference servers. The first inference server is an inference server that is in the computing cluster and that processes the inference task. Refer to FIG. 2. In an example, the inference task is allocated by the scheduler 202. The scheduler 202 can allocate, based on the load status of each inference server included in the computing cluster 203, the inference task to the inference server 2031 with less load, that is, the first inference server.

The first inference server includes at least one inference card and a local memory. The inference card is a processor constructed based on a GPU or an embedded neural-network processing unit (neural-network processing unit, NPU) to improve inference computing performance. The inference card is configured to receive and execute the inference task. In some other possible implementations, the first inference server includes one inference card. The first inference server allocates the inference task to the inference card, that is, the first inference card.

In some other possible implementations, the first inference server includes at least two inference cards. The first inference server determines, from the at least two inference cards, the first inference card to receive the inference task. In an example, the first inference server can allocate, based on load statuses of the inference cards, the inference task to an inference card with less load, that is, the first inference card. Refer to FIG. 2. In an example, the inference server 2031 allocates, based on load statuses of the GPU1 and a GPU2, the inference task to the inference card with less load that is constructed based on the GPU1.

S502: If a parameter for executing the inference task is not hit in the first inference card, the first inference card obtains the parameter from the local memory of the first inference server.

The first inference card can store, in advance, a part of parameters for executing an inference task. In an example, the first inference card is constructed based on the GPU, and the first inference card can store, based on an HBM cache constructed based on a high bandwidth memory (High Bandwidth Memory, HBM), the part of parameters for executing the inference task. Because a storage capacity of the HBM cache is limited, the first inference card can store only the part of parameters for executing the inference task. In an example, the first inference card stores, in advance, the part of parameters for query. For example, the first inference card stores, in advance, a parameter whose query frequency is greater than a first threshold. In another example, the first inference card stores a historically queried parameter.

In some cases, the first inference card does not store the parameter required for executing the inference task this time. The parameter required for executing the inference task is not hit in the first inference card. The first inference card queries the local memory of the inference server in which the first inference card is located for the parameter required for executing the inference task. As shown in FIG. 2, after the parameter required for executing the inference task is not hit in the inference card constructed based on the GPU1, the inference card queries the local memory of the inference server 2031 for the parameter required for executing the inference task.

The local memory of the first inference server can be a memory established based on a CPU. Compared with the first inference card, the local memory of the first inference server can store more parameters. In a possible implementation, the local memory of the first inference server can store a parameter whose query frequency is greater than a second threshold, so that the inference card included in the first inference server performs parameter query. The second threshold is less than or equal to the first threshold. In other words, the local memory of the first inference server can store a parameter whose query frequency is slightly lower than that of the parameter stored in the first inference card. In another possible implementation, the local memory of the first inference server stores a parameter required by the inference card for historically executing an inference task, so that the inference card included in the first inference server subsequently performs a query again.

A delay of query the parameter can be reduced based on a high-speed read/write capability of the local memory of the first inference server. In addition, the local memory of the first inference server can store the parameter with high frequency of being queried by the inference card included in the first inference server. In this way, concurrent query, caused by centralized parameter storage, for the parameter with high frequency of being queried by a plurality of inference cards can be avoided to some extent, and a delay of query the parameter can be reduced.

In a possible implementation, the local memory of the first inference server is a shared memory. The local memory of the first inference server supports simultaneous access of the at least one inference card included in the first inference server, improving efficiency of obtaining the parameter by the inference card included in the first inference server. A manner in which the local memory of the first inference server stores the parameter is not limited in this embodiment of this application. In a possible implementation, the parameter stored in the local memory of the first inference server is managed by using a hash table. For a specific implementation, refer to the following descriptions.

S503: If the parameter is not hit in the local memory, obtain the parameter from a memory pool.

The local memory has a limited capacity and can only store a part of parameters for a large number of full parameters. When the local memory does not store the parameter for executing the current inference task, the parameter for executing the current inference task cannot be queried in the local memory.

The memory pool of the computing cluster has a large capacity and can store a large number of parameters. In a possible implementation, the memory pool can store full parameters for executing the inference task. The parameter can be obtained by using the memory pool that stores the full parameters.

After the parameter is not hit in the local memory, the parameter is obtained from the memory pool. In some possible implementations, the memory pool is registered on an RDMA network interface card. Parameter transmission is implemented through RDMA, so that parameter transmission efficiency can be improved. A specific implementation of query the parameter in the memory pool is not limited in this embodiment of this application. In a possible implementation, the memory pool stores the full parameters in a continuous storage manner. When the parameter is queried in the memory pool, a location offset of a stored parameter can be determined based on an index of the parameter. A storage location of the parameter is determined based on start addresses and location offsets of the full parameters stored in the memory pool, and then the parameter is obtained.

Further, in a possible implementation, after the parameter is obtained from the memory pool, the parameter is stored in the first inference card, so that the first inference card executes the inference task based on the parameter stored in the first inference card.

S504: After obtaining all parameters for executing the inference task, the first inference card executes the inference task.

The first inference card can execute the inference task based on all the obtained parameters for executing the inference task, and obtain an inference result of executing the inference task.

In a possible implementation, a local memory of a first server manages the stored parameter by using the hash table. The hash table includes each parameter stored in the local memory, a hash value of an index of each parameter, and a correspondence between each parameter and a hash value of an index of the parameter.

When the parameter for executing the inference task is queried in the local memory, a hash value of an index is calculated based on the index of the parameter. Then whether the hash value of the index exists in the hash table is checked. If the hash value of the index exists in the hash table, it indicates that the local memory stores the parameter for executing the inference task, and the parameter for executing the inference task can be hit in the local memory. A parameter corresponding to the hash value of the index stored in the hash table is obtained, and the parameter for executing the inference task is obtained.

In an example, a plurality of hash buckets are set in contiguous memories of the local memory. Each hash bucket stores one parameter and an index of the parameter. The hash bucket has a mapping relationship with a hash value of the index of the stored parameter. An offset length of a storage location can be determined based on the hash value of the index. The hash bucket can be located based on a start address and the offset length of the storage location.

When the parameter for executing the inference task is queried in the local memory, the hash value of the index is calculated based on the index of the parameter. If no hash bucket can be located based on the hash value, it indicates that the local memory does not store the parameter for executing the inference task. If a hash bucket can be located based on the hash value, a parameter stored in the hash bucket is obtained, and the parameter for executing the inference task is obtained.

Further, in some possible implementations, the hash table used to manage the local memory further includes state information corresponding to each parameter. The state information identifies whether the parameter is in a read state or a write state. If the state information identifies that the parameter is in the read state, it indicates that an inference card is performing a read operation on the parameter corresponding to the state information. If the state information identifies that the parameter is in the write state, it indicates that another inference card is performing a write operation on the parameter corresponding to the state information. During this process, the parameter may be updated. To ensure accuracy of the parameter obtained from the local memory, when the state information identifies that the parameter corresponding to the state information is in the write state, the inference card that accesses the parameter cannot update the parameter corresponding to the state information.

In an example, that the foregoing hash bucket stores the parameter and the index is used as an example, and the hash bucket stores a triplet <R/W Count, Key, Value>. R/W Count (Read/Write count, read/write count) is the state information. R/W Count is a 32-bit atomic variable. A value of R/W Count includes -1, 0, or a positive integer greater than 0. If the value of R/W Count is -1, it indicates that the parameter is in the write state. If the value of R/W Count is 0, it indicates that the parameter is in an operable state. If the value of R/W Count is a positive integer greater than 0, it indicates that the parameter is in the read state. When the local memory is the shared memory, the inference card accessing the local memory can adjust, through an atomic operation, a value of the state information corresponding to the parameter, to avoid contention when a plurality of inference cards concurrently perform the read or write operation on the parameter, and implement a concurrent high-speed read/write of the plurality of inference cards. Key (key) is the index of the parameter. Key uses a 64-bit variable to store the index of the parameter. Value (value) is the parameter. A value of Value is a value of the parameter. A size of the contiguous memories that stores the hash bucket in the local memory is a product of a data type size of the parameter and a parameter dimension. For example, the parameter is an embedded table parameter, and the parameter dimension is an embedded dimension.

Refer to Table 1. In an example, the table is a hash table provided in this embodiment of this application.

**Table 1**

| Hash index | R/W count | Key | Value |
|---|---|---|---|
| 0 | 1 | 1000 | Value of 1000 |
| 1 | 2 | 100 | Value of 100 |
| 2 | 0 | 1 | Value of 1 |
| 3 | -1 | 2009 | Value of 2009 |
| 4 | 0 | null | null |

A hash value (Hash Index) is used to locate a hash bucket. A hash bucket corresponding to a hash value 0 stores a parameter whose index is 1000. If a value of R/W count is 1, it indicates that the parameter whose index is 1000 is in the read state. A hash bucket corresponding to a hash index 1 stores a parameter whose index is 100. If a value of R/W count is 2, it indicates that the parameter whose index is 100 is in the read state. A hash bucket corresponding to a hash index 2 stores a parameter whose index is 1. If a value of R/W count is 0, it indicates an operable state. A hash bucket corresponding to a hash index 3 stores a parameter whose index is 2009. If a value of R/W count is -1, it indicates that the parameter whose index is 2009 is in the write state. A hash bucket whose hash index is 4 is an empty bucket. Both an index and a parameter are null. If a value of R/W count is 0, it indicates an operable state.

In some possible implementations, one hash bucket can store a mapping relationship between values of parameters and a plurality of indexes whose hash values are the same. Parameter information stored in the hash bucket further includes an index of the hash bucket. For example, the parameter information includes R/W count, Key, *prev, *next, and Value. *prev is an index of a previous hash bucket. *next is an index of a next hash bucket. The parameter information is stored in a form of a quintuple. The quintuple is <R/W Count, Key,*prev,*next, Value>.

Refer to Table 2. In an example, the table is another hash table provided in this embodiment of this application.

**Table 2**

| Hash index | R/W count | Key | *prev | *next | Value |
|---|---|---|---|---|---|
| 0 | 1 | 1000 | null | null | Value of 1000 |
| 1 | 2 | 100 | null | 2 | Value of 100 |
| 2 | 0 | 1 | 1 | null | Value of 1 |
| 3 | -1 | 2009 | null | null | Value of 2009 |
| 4 | 0 | null | null | null | null |

When the index is used to search for the parameter, the hash value of the index is first used to determine the hash bucket. Then, a query starts from a start address of the located hash bucket until the index is found, and the parameter corresponding to the index is obtained. In this way, a hash conflict can be resolved, and parameter search efficiency can be improved.

In some possible implementations, an eviction thread for the hash table is constructed. In an example, a least recently used (Least Recently Used, LRU) thread is used to manage an eviction process of the hash table. A bidirectional linked list including a plurality of nodes is established. Each node stores a key-value pair of one parameter and one index that are managed in the hash table. A key-value pair included in a node close to a head in the bidirectional linked list is processed by a recent operation. A key-value pair included in a node close to a tail in the bidirectional linked list is not processed for a long time. In a process of query a parameter, a node of the current query in the bidirectional linked list is determined based on a key, and the node is moved to a location close to the head. In a process of writing a parameter, a new node is established at the head in the bidirectional linked list, and the written parameter and an index are written into the newly established node as a key-value pair. If a quantity of nodes in the bidirectional linked list including the newly established node exceeds a threshold, a tail node of the bidirectional linked list is deleted. Parameter information corresponding to a key-value pair included in the tail node is deleted from the hash table.

In an example, that the state information is R/W count is used as an example. This embodiment of this application provides a specific implementation of obtaining the parameter from the local memory. Specifically, the first inference card locates the hash bucket based on the hash value of the index of the parameter required for executing the inference task. A value of R/W count included in the hash bucket is read.

If the value of R/W count is 0, it indicates that a target parameter is in the operable state, and the first inference card can read a parameter degree stored in the hash bucket. If the value of R/W count is a positive integer greater than 0, it indicates that a target parameter is in the read state, and the first inference card can read a parameter degree stored in the hash bucket.

After determining that R/W count is in the read state or the operable state, the first inference card adjusts, through the atomic operation, R/W count included in the hash bucket to the value indicating the read state. The value of R/W count is modified through the atomic operation, so that interrupting the operation due to scheduling of another inference card can be avoided, and it is ensured that the value of R/W count is modified. The atomic operation is, for example, a compare and swap (compare and swap, Cas) operation. The value of R/W count is still used as an example. In an example, the value of R/W count is 0, and R/W count is increased by 1 by using R/W count, so that an obtained value of R/W count is 1. R/W count whose value is 1 indicates that the parameter corresponding to R/W count is in the read state. In another example, the value of R/W count is 2, and R/W count is increased by 1 through the atomic operation, so that an obtained value of R/W count is 3. R/W count whose value is 3 indicates that the parameter corresponding to R/W count is in the read state. After the value of R/W count is adjusted through the atomic operation, the first inference card reads the parameter stored in the hash bucket.

After reading the parameter, the first inference card adjusts R/W count to the read state or the operable state through the atomic operation, so that another inference card performs an operation on the parameter.

In a possible implementation, the value of R/W count is restored, through the atomic operation, to the value of R/W count before the current parameter read. The foregoing adjustment method in which the value of R/W count is increased by 1 before the parameter is read is used as an example. After the parameter is read, the value of R/W count is decreased by 1, to restore R/W count. After obtaining the parameter from the local memory, the first inference card stores the parameter in the first inference card, to subsequently obtain the parameter from the first inference card.

In addition, in an example, that the state information is R/W count is used as an example. This embodiment of this application further provides a specific implementation of writing the parameter into the local memory. After the parameter that needs to be written into the local memory is obtained, a hash bucket for storing the parameter is first determined. In a possible implementation, a hash bucket that does not store a parameter is used as the hash bucket for the current parameter write. In an example, the hash bucket stores R/W count, key, and Value. Both Key and Value are null. In another possible implementation, a parameter that is stored in the hash bucket needs to be updated based on the to-be-written parameter. The hash bucket in which the parameter needs to be updated is determined based on a hash value of an index of the parameter that needs to be written into the local memory.

R/W count included in the hash bucket is set through the atomic operation, to indicate the write state. For example, the value of R/W count includes -1, 0, or a positive integer greater than 0. -1 indicates that the parameter is in the write state, 0 indicates that the parameter is in the operable state, and a positive integer greater than 0 indicates that the parameter is in the read state. R/W count included in the hash bucket is set to -1. The value of R/W count is modified through the atomic operation, so that interrupting the operation due to scheduling of another inference card can be avoided, it is ensured that the value of R/W count is modified, and the write operation on the parameter can be implemented. Except the inference card that performs the write operation, when another inference card accesses the parameter stored in the hash bucket, and determines that the value of R/W count is -1, that is, when the parameter stored in the hash bucket is in a write state, the another inference card does not update the parameter stored in the hash bucket, that is, does not perform the read operation or the write operation on the parameter stored in the hash bucket, to avoid confusion of the storage parameter.

After the value of R/W count is adjusted through the atomic operation, the parameter is written into the hash bucket. In a possible implementation, the hash bucket is the hash bucket that does not store a parameter, that is, both stored Key and Value are null. Set a value of Key stored in the hash bucket to the index of the parameter, and set the value to the value of the to-be-written parameter. In another possible implementation, the hash bucket is the hash bucket in which the stored parameter needs to be replaced. The value stored in the hash bucket is replaced with the value of the to-be-written parameter.

After the parameter is written, R/W count is adjusted, through the atomic operation, to indicate the operable state or the read state. For example, the value of R/W count includes -1, 0, or a positive integer greater than 0. R/W count included in the hash bucket is set to 0 or a positive integer greater than 0.

In some possible implementations, a part of local memories of the first inference server is used to construct the memory pool. Refer to FIG. 2. The part of local memories of the inference server 2031 is used to establish the memory pool 2034. If the parameter for executing the inference task is stored in the part of memories in the memory pool constructed based on the local memory of the inference server 2031, the parameter does not need to be stored in the local memory of the inference server 2031. The local memory can store a parameter other than the parameter that is required by the server and that is stored in the memory used by the inference server 2031 to construct the memory pool. In this way, in a memory of an inference server, no repeated parameter is stored, to improve usage efficiency of the memory of the inference server.

It should be noted that the memory pool that is shown in FIG. 2 and that is constructed based on the part of memories of the CPU of the inference server is merely an example. Refer to FIG. 3. In another possible implementation, the memory pool is constructed by the storage server. Refer to FIG. 4. In still another possible implementation, the memory pool is constructed based on the storage server and the part of memories of the CPU of the inference server.

In a possible implementation, this embodiment of this application provides a specific implementation of initializing the memory pool. It should be first noted that the method for initializing a memory pool can be applied to a server included in the computing cluster. The server may be the inference server, or may be the storage server. The following uses the inference server 2031 in FIG. 2 as an example to describe a process of initializing the memory pool, including the following three steps.

A1: The inference server 2031 receives a memory pool construction instruction.

The memory pool construction instruction instructs the server to establish the memory pool. In a possible implementation, the memory pool construction instruction is generated based on a memory capacity required for the full parameters that need to be stored and memory usage of the server included in the computing cluster. In another possible implementation, the memory pool construction instruction is generated based on a memory distribution instruction triggered by a user. The memory distribution instruction instructs the server to establish the memory pool and a memory that is of each server and that is occupied by the memory pool.

The memory pool construction instruction includes a server identifier of the inference server 2031 and a target memory capacity corresponding to the server identifier. After receiving the memory pool construction instruction, the inference server 2031 establishes the memory pool based on the server identifier of the inference server 2031 that is included in the memory pool construction instruction and by using a memory of the inference server 2031 based on the target memory capacity.

A2: The inference server 2031 determines, in the memory, a target memory used to construct the memory pool.

The inference server 2031 can divide, in the memory based on the obtained memory pool construction instruction, the target memory used to establish the memory pool. A capacity of the target memory is greater than or equal to the target memory capacity. FIG. 6 is a diagram of a structure of an inference server according to an embodiment of this application. The memory of the inference server 2031 includes two parts: a memory 601 and a memory 602. The memory 601 is the local memory that is of the inference server 2031 and that is configured to store the parameter. The memory 602 is a target memory of the inference server 2031, and is configured to construct the memory pool.

A3: Send parameter storage location information and a memory pool storage handle.

After determining the target memory used to construct the memory pool, the inference server 2031 generates the parameter storage location information and the memory pool storage handle. The parameter storage location information indicates a storage location of the target memory. The location of the memory of the inference server 2031 in the target memory that is divided by the inference server 2031 and that is used to construct the memory pool can be determined based on the parameter storage location information. The memory pool storage handle is used to point to the target memory. The target memory is accessed and parameter reading and writing is implemented based on the memory pool storage handle.

It should be noted that a method for establishing the memory pool by the inference server 2032 is similar to the method for establishing the memory pool by the inference server 2031. Details are not described herein again.

A method for establishing the memory pool by the storage server is similar to the method for establishing the memory pool by the inference server 2031. FIG. 3 is used as an example. The storage server 3034 and the storage server 3035 included in the computing cluster 303 receive a memory pool construction instruction, and establish the memory pool based on the memory pool construction instruction.

After the memory pool is established, the parameter is written to the memory pool, so that the parameter that is not hit in the inference card and the local memory of the inference server can be queried in the memory pool.

The following still uses the inference server 2031 included in FIG. 2 as an example to describe a process of writing the parameter into the memory pool. Writing the parameter to the inference server 2031 may include the following three steps.

B1: Receive an original storage location of the to-be-written parameter.

It should be noted that the memory pool may include memories of a plurality of servers. Each memory that constructs the memory pool stores a part of parameters. The to-be-written parameter is a parameter that is in the full parameters for executing the inference task for the neural network model and that needs to be stored in the memory pool constructed based on the memory of the inference server 2031.

Before the parameter is stored in the memory pool, the parameter is stored in another storage structure or another storage device. An original storage structure or an original storage device is, for example, a persistent storage structure or a persistent storage device. For example, the parameter is stored in a distributed file system (Hadoop Distributed File System, HDFS). For another example, the parameter is stored in a solid-state drive (Solid-State Drive, SSD).

The inference server 2031 receives the original storage location of the to-be-written parameter in the storage structure or the storage device. In some possible implementations, the original storage location of the to-be-written parameter is a storage path of the to-be-written parameter in the storage structure or the storage device.

B2: Obtain the to-be-written parameter from the original storage location.

Based on the original storage location of the to-be-written parameter, the inference server 2031 can access the storage structure or the storage device that stores the parameter, and read the to-be-written parameter from the storage structure or the storage device.

B3: Store the to-be-written parameter in the target memory by using a memory pool storage handle.

The memory pool storage handle generated by the inference server 2031 can point to the target memory allocated by the inference server 2031 to the memory pool. The to-be-written parameter obtained from the original storage location is written into the target memory by using the memory pool storage handle, to implement storage of the to-be-written parameter in the memory pool.

It should be noted that, in some possible implementations, the parameter stored in the local memory of the inference server 2031 is different from that stored in the target memory. The local memory of the inference server 2031 stores a parameter other than the parameter stored in the target memory. In this way, no repeated parameter is stored in one inference server, improving usage efficiency of a storage resource of the inference server.

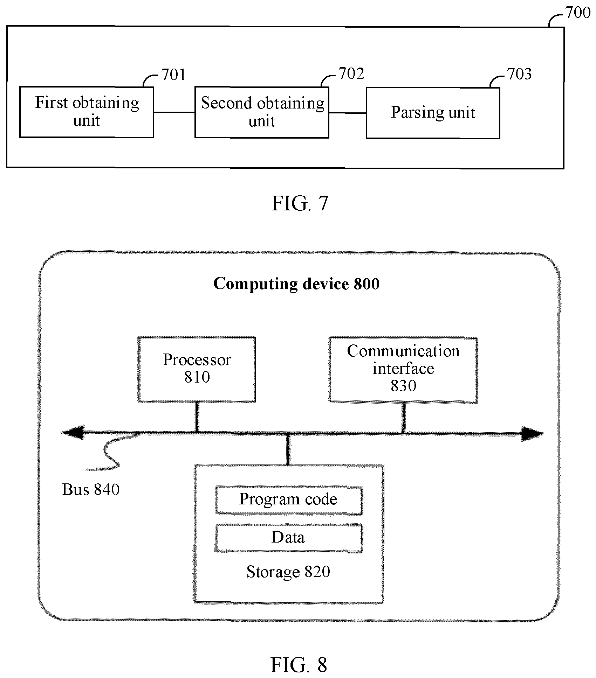

An embodiment of this application further provides an inference apparatus for a neural network model based on the inference method for the neural network model provided in the foregoing embodiments. FIG. 7 is a diagram of a structure of an inference apparatus for a neural network model according to an embodiment of this application. The inference apparatus 700 for the neural network model can be used in an inference card of an inference server included in a computing cluster. The computing cluster includes a plurality of inference servers and a memory pool. Each inference server includes at least one inference card and a local memory. The method may be applied to the application scenario shown in FIG. 2, FIG. 3, or FIG. 4, or may be applied to another applicable application scenario. In an example, the application scenario shown in FIG. 2 is used as an example. The inference apparatus 700 for the neural network model can be used in the inference card established by the GPU 1 of the inference server 2031.

The inference apparatus 700 for the neural network model includes a receiving module 701, a query module 702, and an execution module 703. These modules can perform corresponding functions of the first inference card. The receiving module 701 is configured to support the first inference card in performing S501 in the embodiment shown in FIG. 5. The query module 702 is configured to support the first inference card in performing S502 and S503 in the embodiment shown in FIG. 5. The execution module 703 is configured to support the first inference card in performing S504 in the embodiment shown in FIG. 5. For a specific execution process, refer to detailed descriptions of corresponding steps in the embodiment shown in FIG. 5. Details are not described herein again.

The inference apparatus for the neural network model (including the receiving module 701, the query module 702, and the execution module 703) shown in FIG. 7 may be software configured on a computing device or a computing device cluster. In addition, the computing device or the computing device cluster may implement the function of the inference apparatus for the neural network model by running the software on the computing device or the computing device cluster. The following describes in detail, from a perspective of hardware device implementation, the inference apparatus that is for the neural network model and that is involved in a neural network model inference process.

FIG. 8 is a diagram of a structure of a computing device. The foregoing inference apparatus for the neural network model may be deployed on the computing device. The computing device may be a computing device (for example, a server) in a cloud environment, a computing device in an edge environment, a terminal device, or the like, and may be specifically configured to implement the functions of the receiving module 701, the query module 702, and the execution module 703.

As shown in FIG. 8, the computing device 800 includes: a processor 810, a storage 820, a communication interface 830, and a communication bus 840. The processor 810, the storage 820, and the communication interface 830 communicate with each other through the bus 840. The bus 840 may be a peripheral component interconnect (peripheral component interconnect, PCI) bus, an extended industry standard architecture (extended industry standard architecture, EISA) bus, and the like. Buses may be classified into an address bus, a data bus, a control bus, and the like. For ease of representation, only one thick line is for representing the bus in FIG. 8, but this does not mean that there is only one bus or only one type of bus. The communication interface 830 is configured to communicate with the outside, for example, receive an inference task for the neural network model.

The processor 810 may be a central processing unit (central processing unit, CPU), an application-specific integrated circuit (application-specific integrated circuit, ASIC), a graphics processing unit (graphics processing unit, GPU), or one or more integrated circuits. The processor 810 may be an integrated circuit chip and has a signal processing capability. In an implementation process, the functions of the modules in the inference apparatus for the neural network model may be implemented by using an integrated logic circuit of hardware in the processor 810 or an instruction in a form of software. Alternatively, the processor 810 may be a general purpose processor, a data signal processor (digital signal process, DSP), a field programmable logic gate array (field programmable gate array, FPGA), or another programmable logic device, a discrete gate or a transistor logic device, or a discrete hardware component, and may implement or execute the methods, the steps, and the logical block diagrams disclosed in embodiments of this application. The general purpose processor may be a microprocessor, or the processor may be any conventional processor, or the like. The method disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the storage 820. The processor 810 reads information in the storage 820, and completes some or all functions of the inference apparatus for the neural network model in combination with the hardware of the processor 810.

The storage 820 may include a volatile memory (volatile memory), for example, a random access memory (random access memory, RAM). The storage 820 may further include a non-volatile memory (non-volatile memory), for example, a read-only memory (read-only memory, ROM), a flash memory, an HDD, or an SSD.

The storage 820 stores executable code, and the processor 810 executes the executable code to perform the method performed by the foregoing inference apparatus for the neural network model.

Specifically, when the embodiment shown in FIG. 5 is implemented based on the receiving module 701, the query module 702, and the execution module 703 described in the embodiment shown in FIG. 7, and the receiving module 701, the query module 702, and the execution module 703 described in the embodiment shown in FIG. 7 are implemented by using software, software or program code required by the receiving module 701, the query module 702, and the execution module 703 to perform the functions of the steps in the embodiment shown in FIG. 5 is stored in the storage 820, interaction between the receiving module 701 and another device is implemented by using the communication interface 830. The processor is configured to execute the instruction in the storage 820, to implement the method performed by the inference apparatus for the neural network model.

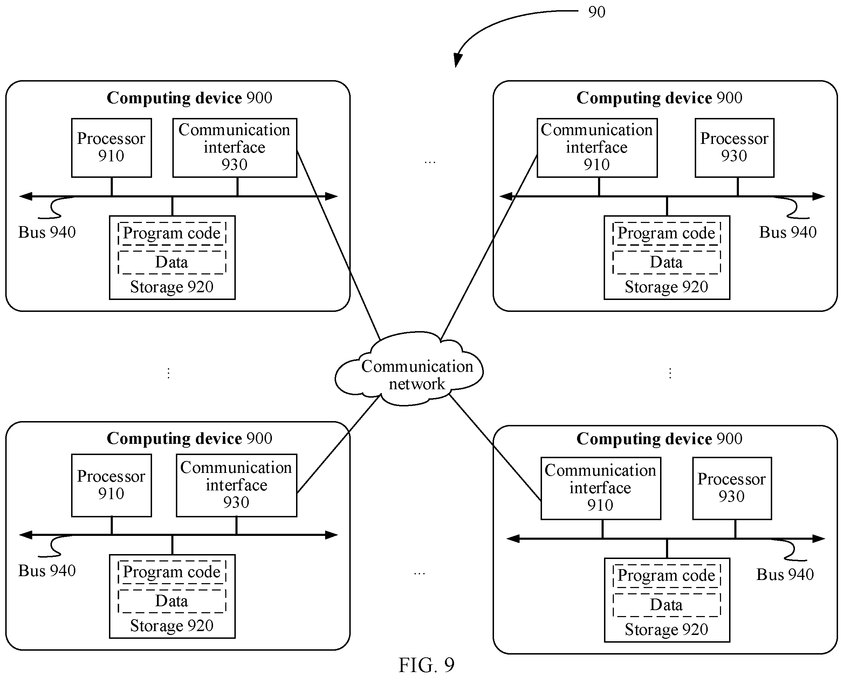

FIG. 9 is a diagram of a structure of a computing device cluster. The computing device cluster 90 shown in FIG. 9 includes a plurality of computing devices, and the foregoing inference apparatus for the neural network model may be deployed on the plurality of computing devices in the computing device cluster 90 in a distributed manner. As shown in FIG. 9, the computing device cluster 90 includes a plurality of computing devices 900, and each computing device 900 includes a storage 920, a processor 910, a communication interface 930, and a bus 940. The storage 920, the processor 910, and the communication interface 930 implement communication connections to each other through the bus 940.

The processor 910 may be a CPU, a GPU, an ASIC, or one or more integrated circuits. The processor 910 may be an integrated circuit chip and has a signal processing capability. In an implementation process, some functions of the inference apparatus for the neural network model may be implemented by using an integrated logic circuit of hardware in the processor 910 or an instruction in a form of software. Alternatively, the processor 910 may be a DSP, an FPGA, a general purpose processor, another programmable logic device, a discrete gate or a transistor logic device, or a discrete hardware component, and may implement or perform some methods, steps, and logical block diagrams disclosed in embodiments of this application. The general purpose processor may be a microprocessor, or the processor may be any conventional processor, or the like. The steps of the method disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the storage 920. In each computing device 900, the processor 910 reads information in the storage 920, and may complete some functions of the inference apparatus for the neural network model in combination with the hardware of the processor 910.

The storage 920 may include a ROM, a RAM, a static storage device, a dynamic storage device, a hard disk (for example, an SSD or an HDD), and the like. The storage 920 may store program code, for example, some or all program code used to implement the receiving module 701, some or all program code used to implement the query module 702, and some or all program code used to implement the execution module 703. For each computing device 900, when the program code stored in the storage 920 is executed by the processor 910, the processor 910 performs, based on the communication interface 930, some methods performed by the inference apparatus for the neural network model. For example, some computing devices 900 may be configured to perform the methods performed by the receiving module 701 and the query module 702, and some other computing devices 900 are configured to perform the methods performed by the execution module 703. The storage 920 may further store data, for example, intermediate data or result data generated by the processor 910 in an execution process, for example, the foregoing obtained parameter and the execution result of executing the inference task.

The communication interface 903 in each computing device 900 is configured to communicate with the outside, for example, interact with another computing device 900.

The bus 940 may be a peripheral component interconnect bus, an extended industry standard structure bus, or the like. For ease of representation, the bus 940 in each computing device 900 in FIG. 9 is represented by using only one thick line, but this does not mean that there is only one bus or only one type of bus.

A communication path is established between the plurality of computing devices 900 by using a communication network, to implement the function of the inference apparatus for the neural network model. Any computing device may be a computing device (for example, a server) in a cloud environment, a computing device in an edge environment, or a terminal device.

In addition, an embodiment of this application further provides a computer-readable storage medium. The computer-readable storage medium stores instructions. When the instructions are run on one or more computing devices, the one or more computing devices are enabled to perform the method performed by each module of the inference apparatus for the neural network model in the foregoing embodiment.

In addition, an embodiment of this application further provides a computer program product. When the computer program product is executed by one or more computing devices, the one or more computing devices perform any one of the foregoing inference methods for the neural network model. The computer program product may be a software installation package. If any one of the foregoing inference methods for the neural network model needs to be used, the computer program product may be downloaded, and the computer program product may be executed on a computer.

In addition, it should be noted that the described apparatus embodiment is merely an example. The units described as separate parts may or may not be physically separate, and parts displayed as units may or may not be physical units, may be located in one location, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

With the descriptions of the foregoing implementations, a person skilled in the art may clearly understand that this application may be implemented by software in addition to necessary universal hardware, or by dedicated hardware, including a dedicated integrated circuit, a dedicated CPU, a dedicated storage, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement embodiments, all or some embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

## Claims

1. An inference method for a neural network model, applied to a computing cluster, wherein the computing cluster comprises a plurality of inference servers and a memory pool, each inference server comprises at least one inference card and a local memory, and the method comprises:
receiving, by a first inference card of a first inference server in the computing cluster, an inference task;
after a parameter for executing the inference task is not hit in the first inference card, obtaining, by the first inference card, the parameter from a local memory of the first inference server;
when the parameter is not hit in the local memory, obtaining the parameter from the memory pool; and
after obtaining all parameters for executing the inference task, executing, by the first inference card, the inference task.

2. The method according to claim 1, wherein the memory pool stores full parameters of the neural network model.

3. The method according to claim 1 or 2, wherein the local memory is a shared memory that can be simultaneously accessed by the at least one inference card.

4. The method according to any one of claims 1 to 3, wherein the local memory manages parameters in the local memory by using a hash table, and the hash table records corresponding parameters and hash values of indexes of the parameters; and
the obtaining, by the first inference card, the parameter from a local memory of the first inference server comprises: determining, by the first inference card based on the hash values of the indexes of the parameters, whether a hash value of an index of the parameter exists in the hash table; and if the hash value exists in the hash table, hitting the hash value in the local memory, and obtaining the parameter corresponding to the hash value.

5. The method according to claim 4, wherein the hash table further comprises state information of the parameter, the state information identifies whether the parameter is in a read state or a write state, and when the parameter is in the write state, the parameter cannot be updated.

6. An inference apparatus for a neural network model, used in a first inference card of a first inference server comprised in a computing cluster, wherein the computing cluster comprises a plurality of inference servers and a memory pool, each inference server comprises at least one inference card and a local memory, and the apparatus comprises:
a receiving module, configured to receive an inference task;
a query module, configured to: after a parameter for executing the inference task is not hit in the first inference card, obtain the parameter from a local memory of the first inference server, wherein
the query module is further configured to: when the parameter is not hit in the local memory, obtain the parameter from the memory pool; and
an execution module, configured to: after all parameters for executing the inference task are obtained, execute the inference task.

7. The apparatus according to claim 6, wherein the memory pool stores full parameters of the neural network model.

8. The apparatus according to claim 6 or 7, wherein the local memory is a shared memory that can be simultaneously accessed by the at least one inference card.

9. The apparatus according to any one of claims 6 to 8, wherein the local memory manages parameters in the local memory by using a hash table, and the hash table records corresponding parameters and hash values of indexes of the parameters; and
that the query module is configured to obtain the parameter from the local memory of the first inference server comprises:
the query module is configured to: determine, based on the hash values of the indexes of the parameters, whether a hash value of an index of the parameter exists in the hash table; and if the hash value exists in the hash table, hit the hash value in the local memory, and obtain the parameter corresponding to the hash value.

10. The apparatus according to claim 9, wherein the hash table further comprises state information of the parameter, the state information identifies whether the parameter is in a read state or a write state, and when the parameter is in the write state, the parameter cannot be updated.

11. A computing device cluster, wherein the computing device cluster comprises at least one computing device, and each computing device comprises a processor and a storage, wherein
the storage is configured to store instructions; and
the processor is configured to enable, based on the instructions, the computing device cluster to perform the method according to any one of claims 1 to 5.

12. A computer-readable storage medium, wherein the computer-readable storage medium stores instructions, and when the instructions are run on a computing device, the computing device is enabled to perform the method according to any one of claims 1 to 5.

13. A computer code product comprising instructions, wherein when the computer code product runs on a computing device, the computing device is enabled to perform the method according to any one of claims 1 to 5.
